**Europäisches Patentamt**

**European Patent Office**

**Office européen des brevets**

(19)

(11) Veröffentlichungsnummer : **0 380 987 B1**

(12)

# EUROPÄISCHE PATENTSCHRIFT

(45) Veröffentlichungstag der Patentschrift :
15.07.92 Patentblatt 92/29

(51) Int. Cl.⁵ : **B60B 3/06**

(21) Anmeldenummer : **90101146.0**

(22) Anmeldetag : **20.01.90**

(54) **Fahrzeugrad.**

(30) Priorität : **27.01.89 DE 3902362**

(43) Veröffentlichungstag der Anmeldung :
**08.08.90 Patentblatt 90/32**

(45) Bekanntmachung des Hinweises auf die
Patenterteilung :
**15.07.92 Patentblatt 92/29**

(84) Benannte Vertragsstaaten :
**AT BE CH DE DK ES FR GB IT LI NL SE**

(56) Entgegenhaltungen :
**FR-A- 808 761**
**US-A- 1 398 614**
**US-A- 2 439 881**
**US-A- 3 250 571**
**US-A- 3 506 311**

(73) Patentinhaber : **SÜDRAD Autoräder GmbH &**
**Co Kommanditgesellschaft**
**Strutstrasse 21**
**W-7333 Ebersbach/Fils (DE)**

(72) Erfinder : **Weber, Gottfried**
**Silcherstrasse 23**
**W-7333 Ebersbach/Fils (DE)**

(74) Vertreter : **KOHLER SCHMID + PARTNER**
**Patentanwälte**
**Ruppmannstrasse 27**
**W-7000 Stuttgart 80 (DE)**

**Beschreibung**

Die Erfindung betrifft ein Fahrzeugrad mit einer an Hinterschneidungen einer Radschüssel formschlüssig angegossenen Felge für insbesondere Personenkraftwagen, Lastkraftwagen oder Motorräder, wobei die Hinterschneidungen den Randbereich der Radschüssel durchdringende, allenfalls zur Randkante der Radschüssel hin offene Ausnehmungen sind, deren Ränder von dem angegossenen Material der Felge vollständig umfaßt sind.

Ein derartiges Rad ist durch US-A-1 398 614 bekannt. Bei einer Radscheibe sind dort und zum Rand hin offene Aussparungen mit Hinterschneidungen vorgesehen, die in der Fläche des übrigen Randes der Radscheibe liegen.

Auch aus EP-B1-0 017 619 ist ein Fahrzeugrad mit einer an Hinterschneidungen einer Radschüssel formschlüssig angegossenen Felge bekannt. Mit den dort bescribenen Verankerungsformen zwischen Felge und Radkörper lassen sich allerdings keine für hohe nforderungen ausreichend sicheren Verbindungen erzielen. So sind die dort für den Fall eines Schwindens des angegossenen Materials zur Erhöhung der Sicherheit vorgesehenen Maßnahmen, wie zusätzliches Schweißen oder Kleben, nicht nur äußerst aufwendig, sondern darüber hinaus auch sicherheitstechnisch nicht unbedenklich.

Soweit dort ein Rad beschrieben ist, bei dem die Felge an die äußeren verdickten Enden von Speichen des Radkörpers angegossen ist, läßt sich ein solches Rad nur in einer recht komplizierten Gießform herstellen, da die Form sämtliche Speichenzwischenräume dicht ausfüllen muß. Außerdem sind solche Speichenräder auch nicht mit Rädern mit im wesentlichen geschlossenen Radschüsseln als Radkörper vergleichbar, die über ihren gesamten im wesentlichen geschlossenen Außenrandbereich formschlüssig von angegossenem Felgenmaterial eingefaßt sein sollen.

Eine sichere, konstruktiv und herstellungsmäßig einfache Lösung zu finden, die den Sicherheitsanforderungen der heutigen für hohe Geschwindigkeiten ausgelegten Fahrzeuge gesügt, ist die Aufgabe der vorliegenden Erfindung.

Gelöst wird diese Aufgabe durch eine Ausführung der mit Felgen-Gießmaterial auszufüllenden Radschüssel-Hinterschnitte nach des kennzeichnenden Merkmalen des Patestanspruchs 1.

Dadurch, daß die einzelnen Hinterschnitte von verschränkten, d.h. aus der Radschüsselwand heraus verdrehten Laschen gebildet werden, läßt sich eine ausreichende Verbindungssicherheit auch bei zur Radschüssel-Randkante hin offenen Ausnehmungen erreichen. Durch solche Verschränkungen sind in allen Richtungen Hinterschnitte für das anzugießende Felgenmaterial gegeben. Für eine einfache Herstellung solcher Räder mit von offenen Laschen gebildeten Hinterschnitten ist es wichtig, daß die Laschen bis in den geschlossenen Radschüsselwanbereich hinein vollständig von Angußmaterial umschlossen werden. Denn nur dann läßt sich die Gießform problemlos gegenüber der Radschüssel dichten.

Für die Festigkeit der Verbindung zwischen Felge und Radschüssel ist es besonders günstig, wenn die Ausnehmungen einen geschlossenen Rand besitzen.

Durch den Einsatz von Stahl für die Radschüssel besitzt diese insbesondere im Nabenbereich, in dem die das Rad an der Achsnade festlegenden Schrauben angreifen, eine ausreichende Gestalts und Verschleißfestigkeit bei gleichzeitig geringer Wanddicke der radchüssel.

Vorteilhafter Ausführungsbeispiele der Erfindung, auf die diese allerdings nicht beschränk ist, sind in der Zeichnung dargestellt. Es zeigen

Fig. 1 die Ansicht eines Fahrzeugrades,

Fig. 2 einen Schnitt durch dieses Fahrzeugrad nach Linie II-IImit radial verlaufendem Außenrand der Rad schüssel,

Fig. 3 einen Ausschnitt aus einem entsprechend Fig. 2 geshnittenen Rad mit einem axial verlaufenden Außenrand der Radschüssel,

Fig. 4 verschiedese Formen der den Radschüsselrand voll ständig durchdringenden Ausnehmungen für den Felgenanguß nach Ansicht A in den Fig. 2 und 3, teilweise zusammen mit Draufsichten in Richtung des Pfeiles B.

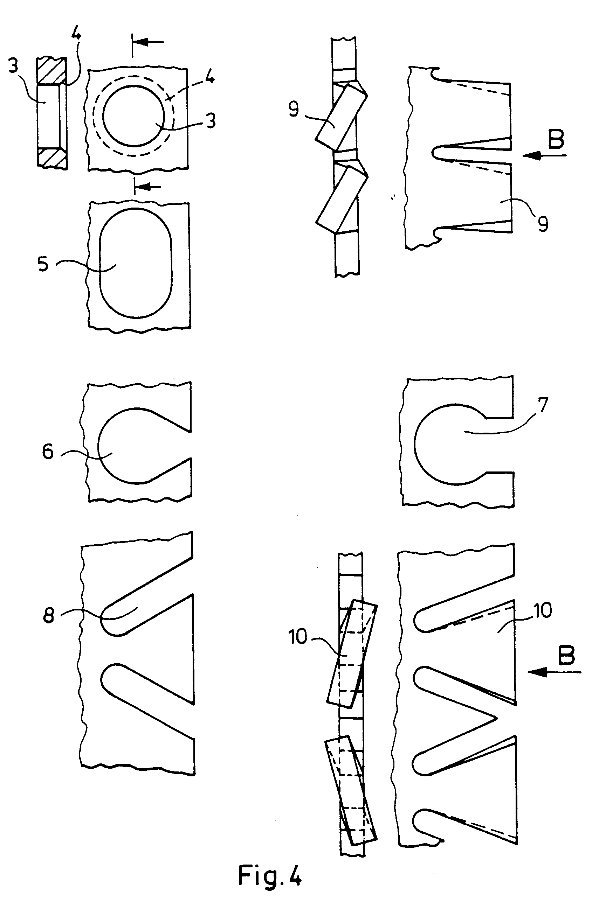

Figur 4, rechte Hälfte oben und unten, zeigt eine Ausführungsform der Erfindung.

Die Felge 1 des Rades besteht aus einer Aluminiumlegierung und ist an eine fertig geformte Radschüssel 2 aus Aluminium angegossen.

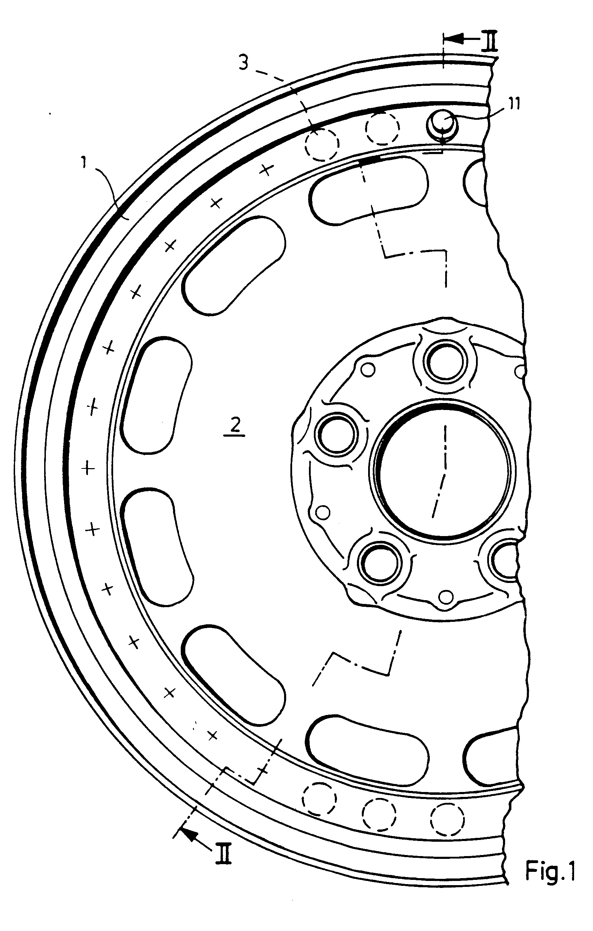

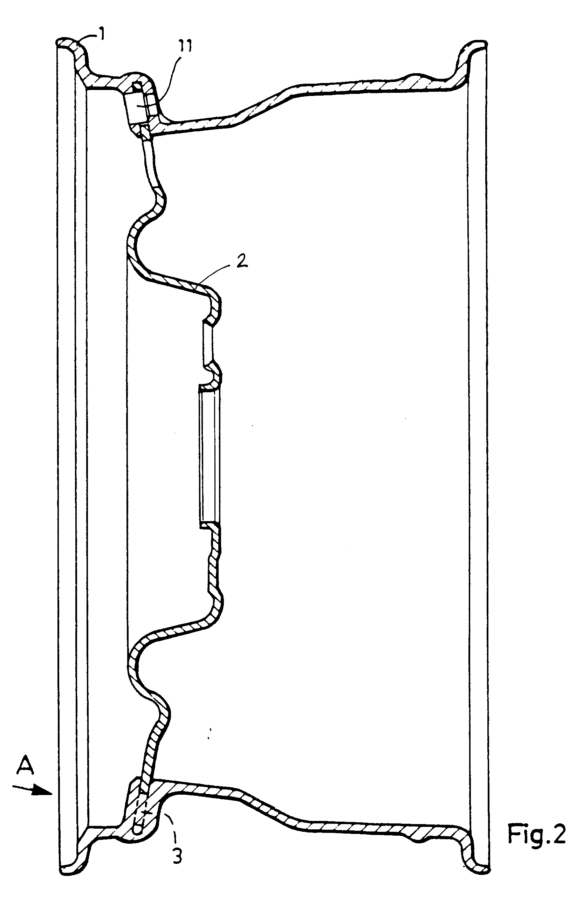

Dei der Ausführung nach den Fig. 1 und 2 werden die Hinterschnitte in Randbereich der im wesentlichen geschlossenen Radkschüssel 2 von durchgehenden Bohrungen 3 gebildet, wobei der Radschüsselrand etwa radial in das Gußmaterial der Felge ragt. Das angegossene Felgenmaterial füllt die Bohrungen 3 vollständig aus und umfaßt gleichzeitig den Rand der Bohrungen, über den es in jedem Fall geringfügig radial hinausragt. Durch die durchgehenden Bohrungen 3 kann das Felgenmaterial beim Eingießen diese Verankerungsbereiche einwandfrei und sicher füllen.

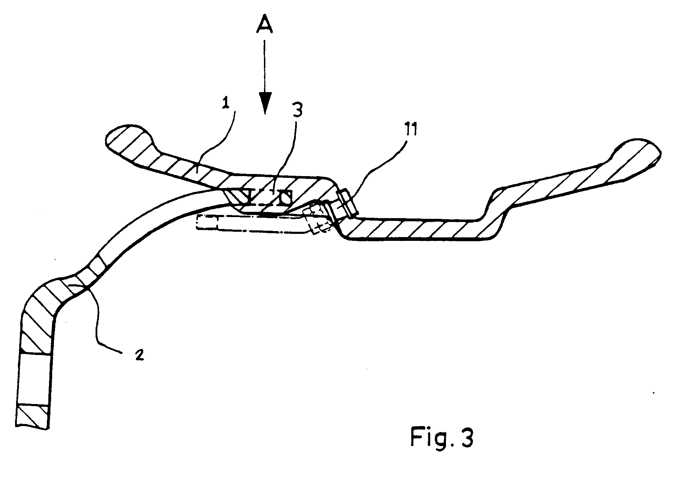

Bei der Ausführung des Rades nach Fig. 3 verläuft der von der Felge 1 erfaßte Rand der Radschüssel 2 axial. Zur Innenumfangsfläche der Felge hin können die Bohrungen 3 jeweils wie in den Fig. 3 und 4 angedeutet mit einer Fase 4 versehen sein.

Eine der Bohrungen kann auch als Ventildurchführungsöffnung 11 dienen.

Wichtig für eine feste und sichere Verankerung der Radschüssel 2 in dem Felgenmaterial 1 ist es, daß das Felgenmaterial den Radschüsselrand im Außenbereich vollständig umgibt, wobei die Felgenmaterialbereiche zu beiden Seiten des Radschüsselrandes über die Bohrungen 3 miteinander verbunden sind.

Anstelle der runden Bohrungen 3 können auch beliebige andere Öffnungsformen verwendet werden. Diese Öffnungen können wie die Bohrungen 3 oder die Langlöcher 5 umfangsmäßig geschlossen sein. Sie können aber auch offen ausgebildet sein, wie die Formen 6, 7 und 8 in Fig. 4 zeigen. Wichtig dabei ist allerdings, daß zumindest in der Ebene des Radschüsselrandes Hinterschnitte vorhanden sind.

Bilden Laschen 9 den Rand einer Radschüssel, die zumindest noch nicht durch hinterschnittene Trennfugen getrennt sind, werden diese Laschen vorteilhafterweise vor dem Umgießen mit Felgenmaterial noch verschränkt, wodurch sich dann zwangsläufig Hinterschnitte bilden.

Solche Verschränkungen können auch an hinterschnittartig ausgebildeten Laschen 10 zur zusätzlichen Verbesserung der Verankerungssicherheit vorgesehen sein.

Durch das bei allen beschriebenen Ausführungsformen mit durchgehenden Ausnehmungen am Rand der Radschüssel 2 erreichte vollständige ungehinderte Umfließen des Radschüsselrandes mit angegossenem Felgenmaterial ist eine absolut sichere Verankerung gewährleistet und zwar bei weitgehender Unabhängigkeit von eventuellen Abweichungen vom exakt vorgeschriebenen Gießprozeß beim Angießen der Felge. Diese hohe Verankerungssicherheit läßt sich nur mit den erfindungs gemäßen Ausnehmungen im Randbereich der Radschüssel erreichen.

## Patentansprüche

1. Fahrzeugrad mit einer an Hinterschneidungen einer Radschüssel formschlüssig angegossenen Felge für insbesondere Personenkraftwagen, Lastkraftwagen oder Motorräder, wobei die Hinterschneidungen den Randbereich der Radschüssel (2) durchdringende, allenfalls zur Randkante der Radschüssel (2) hin offene Ausnehmungen (3, 5, 6, 7 oder 8) sind, deren Ränder von dem angegossenen Material der Felge (1) vollständig umfaßt sind,
**dadurch gekennzeichnet,**
daß zum Rand der Radschüssel (2) hin offene Ausnehmungen (6, 7, 8) zumindest teilweise von gegenüber dem Randbereich des Radschüsselrandes verschränkten bzw. gedrehten Laschen (9, 10) begrenzt sind.

2. Fahrzeugrad nach Anspruch 1,
**dadurch gekennzeichnet,**
daß die Ausnehmungen (3, 5) einen geschlossenen Rand besitzen.

3. Fahrzeugrad nach einem der vorhergehenden Ansprüche,
**dadurch gekennzeichnet ,**
daß die Felge (1) aus Leichtmetall und die Radschüssel (2) aus einem Eisenmaterial besteht.

4. Fahrzeugrad nach Anspruch 3,
**dadurch gekennzeichnet,**
daß die Felge (1) aus einer Aluminiumlegierung und die Radschüssel (2) aus Stahl besteht.

## Claims

1. Vehicle wheel having a rim which is form-fittingly casted on undercuts of a wheel dish especially for private cars, heavy goods vehicles or motor bikes, the undercuts being recesses (3, 5, 6, 7 or 8) which pierce through the marginal area of the wheel dish (2), at most open to the marginal edge of the wheel dish (2), the edges of said recesses are totally surrounded by the on-casted material of the rim (1),
**characterized in that**
recesses (6, 7, 8) which are open to the wheel dish's (2) margin are limited at least partially by lashings which are interlaced or twisted compared to the marginal area of the wheel dish's margin.

2. Vehicle wheel according to claim 1,
**characterized in that**
the recesses (3, 5) have a closed margin.

3. Vehicle wheel according to one of the preceding claims,

**characterized in that,**
the rim (1) consists of a light metal and the wheel dish (2) of an iron material.

4. Vehicle wheel according to claim 3,
**characterized in that,**
the rim (1) consists of an aluminum alloy and the wheel dish (2) of steel.


**Revendications**

1. Roue de véhicule avec une jante qui est jointe par la fonte à engagement positif aux contre-dépouilles d'un plat de roue en particulier pour des voitures particulières, des véhicules utilitaires, des motocyclettes, les contre-dépouilles étant des creux (3, 5, 6, 7 ou 8) qui traversent la zone marginale du plat de roue (2), tout au plus ouverts au regard de l'arête marginale du plat de roue (2), les bords des creux étant complètement entournés par le matérial de la jante qui est joint par la fonte, cette roue étant
**characterisée en ce que**
les creux (6, 7, 8) overts au regard du bord du plat de roue (2) sont limités au moins partiellement par des colliers (9, 10) entrecroisés ou tournés par rapport à la zone marginale du bord du plat de roue.

2. Roue de véhicule selon la revendication 1,
**characterisée en ce que**
les creux (3, 5) ont un bord fermé.

3. Roue de véhicule selon l'une de quelconque des revendications précédentes,
**characterisée en ce que**
la jante (1) se compose du métal léger et le plat de roue (2) d'un matérial de fer.

4. Roue de véhicule selon la revendication 3,
**characterisée en ce que**
la jante (1) se compose d'un alliage d'aluminium et le plat de roue (2) de l'acier.

Fig.1

Fig.2

A

1    3    11

2

Fig. 3

Fig. 4